(19) **Europäisches Patentamt European Patent Office Office européen des brevets**

(11) **EP 3 367 738 B1**

(12) **EUROPEAN PATENT SPECIFICATION**

(45) Date of publication and mention
of the grant of the patent:
**13.03.2024 Bulletin 2024/11**

(21) Application number: **17158358.6**

(22) Date of filing: **28.02.2017**

(51) International Patent Classification (IPC):
**H04W 24/02** (2009.01)

(52) Cooperative Patent Classification (CPC):
**H04W 24/02; H04B 1/1027; H04W 72/541;
H04W 84/12**

(54) **METHOD, SYSTEM AND COMPUTER PROGRAM PRODUCT FOR OPERATING A WIRELESS NETWORK**

VERFAHREN, SYSTEM UND COMPUTERPROGRAMMPRODUKT ZUM BETRIEB EINES DRAHTLOSEN NETZWERKS

PROCÉDÉ, SYSTÈME ET PRODUIT DE PROGRAMME INFORMATIQUE POUR EXPLOITER UN RÉSEAU SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.08.2018 Bulletin 2018/35**

(73) Proprietor: **Nokia Solutions and Networks Oy 02610 Espoo (FI)**

(72) Inventor: **GACANIN, Haris 2018 Antwerp (BE)**

(74) Representative: **Novagraaf Technologies Bâtiment O2 2, rue Sarah Bernhardt CS90017 92665 Asnières-sur-Seine Cedex (FR)**

(56) References cited:
**EP-A1- 3 018 856      EP-A1- 3 048 846
EP-A2- 1 941 761      EP-B1- 1 941 761**

## Description

The present patent disclosure concerns the operation of wireless networks. Particular embodiments of the present patent disclosure relate to a method of operating a wireless network, a system for operating a wireless network and a computer program product.

Wireless networks are used to connect home and office environments to other networks such as the internet. In general, wireless networks operated according to certain standards such that different electronic devices can communicate with each other. For instance, Wi-Fi networks according to the IEEE 802.11 protocol of the Institute of Electrical and Electronics Engineers operate at radio frequency bands having frequencies around 2.4 GHz, 3.6 GHz, 5 GHz, etc. The frequency bands are further divided into channels, indicating smaller bands, for instance having a width of about 22 MHz. A wireless access point typically uses a certain channel, say, channel 6, to transmit and receive radio signals. For the IEEE 802.11b/g/n protocol in the 2.4 GHz band, thirteen channels are defined. The frequency bands of the channels may partially overlap.

The increased use of such wireless networks is causing neighboring networks to increasingly interfere with each other. For instance, wireless access points transmitting radio signals in the same channel or channels having an overlap in used frequency band width may interfere with each other. This interference may drastically reduce the service quality that the user is experiencing between the access point and his or her user devices connected thereto, even causing the service (such as IPTV) not to be usable anymore.

A user, experiencing a bad service quality, may restart the access point. In the event that the access point reconfigures to a new channel while restarting, this may (temporarily) improve the service quality. However, the radio environment for the new channel may change within short time periods, e.g. in the order of minutes, of which the access point and/or user may not be aware. Within a short time, the user may again experience a poor quality of service.

Patent document EP 3 048 846 A1 discloses a method for managing the operation of a wireless access point wherein an operating channel is selected based on interference levels.

Patent document WO 2007/051148 A2 discloses a method for dynamically adjusting a channel occupied by a node, wherein a level of service experienced at the node is determined and a resource utilization message is generated if the level of service is at or below a threshold level. The message indicates a channel selected by the node for subsequent use.

Patent document EP 3 018 856 A1 discloses a method for selecting a wireless communication channel of an access point by measuring the strength of signals received at the access point in a plurality of channels, calculating, based on the measurements, a power sensed at each of the channels, calculating an interference at each of these channels from the calculated power and assigning the communication channel with the least total interference to the wireless access point. The measuring step may be repeated periodically. The calculated power and interference are based on a single measurement point in time.

It is therefore an object of embodiments of the present patent disclosure to operate a wireless network with an increased awareness of the interference that an access point is experiencing.

The scope of the protection is defined by the appended claims.

Further aspects of the present patent disclosure are described by the dependent claims. The features from the dependent claims, features of any of the independent claims and any features of the other dependent claims may be combined as considered appropriate to the person of ordinary skill in the art, and not only in the particular combinations as defined by the claims.

### Brief description of figures

The accompanying drawings are used to illustrate presently preferred non-limiting exemplary embodiments of methods and devices of the present patent disclosure. The above and other advantages of the features and objects of the present patent disclosure will become more apparent and the present patent disclosure will be better understood from the following detailed description when read in conjunction with the accompanying drawings, in which:

Figure 1 schematically illustrates a flowchart of an embodiment of a method according to the present patent disclosure;
Figure 2 schematically illustrates a plot of received signal strength indicators for various access points according to embodiments of the present patent disclosure;
Figure 3 schematically illustrates neighboring wireless networks remotely managed according to embodiments of the present patent disclosure; and
Figure 4 schematically illustrates a plot of the calculated interference parameter versus time according to an embodiment of the present patent disclosure;
Figure 5 schematically illustrates an embodiment of a system for operating a wireless network according to the present patent disclosure.

### Description of embodiments

In general, wireless networks may be run in several ways. One example is a Wi-Fi network according to the IEEE 802.11 protocol of the Institute of Electrical and Electronics Engineers operate at radio frequency bands having frequencies around 2.4 GHz, 3.6 GHz, 5 GHz, etc. The frequency bands are further divided into channels, indicating smaller bands, for instance having a width of about 22 MHz. A wireless access point typically uses a certain channel, say, channel 6, to transmit and receive radio signals. For the IEEE 802.11b/g/n protocol in the 2.4 GHz band, thirteen channels are defined. The frequency bands of the channels may partially overlap.

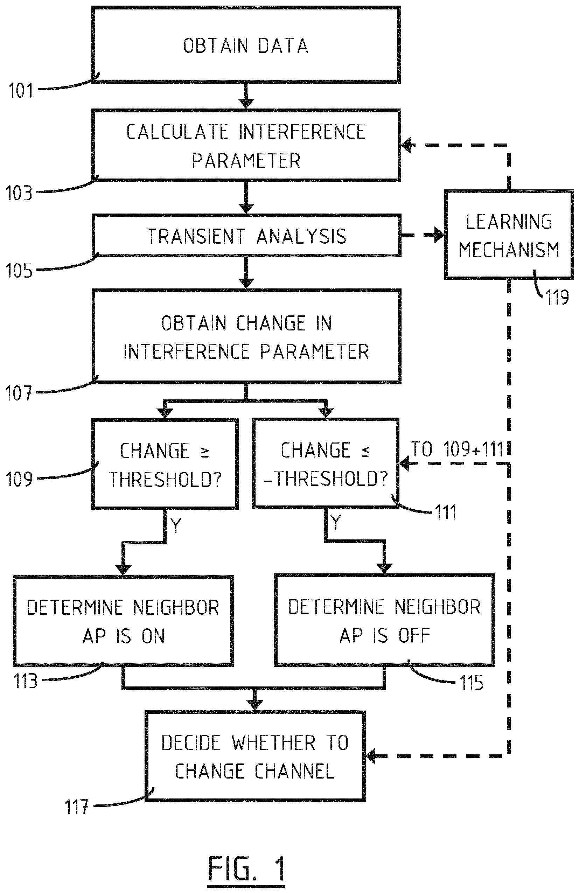

Figure 1 shows method steps that may be executed in order to obtain a parameter indicating an interference on a certain access point, and thereafter use that interference parameter in operating the wireless network, in particular to operate the access points.

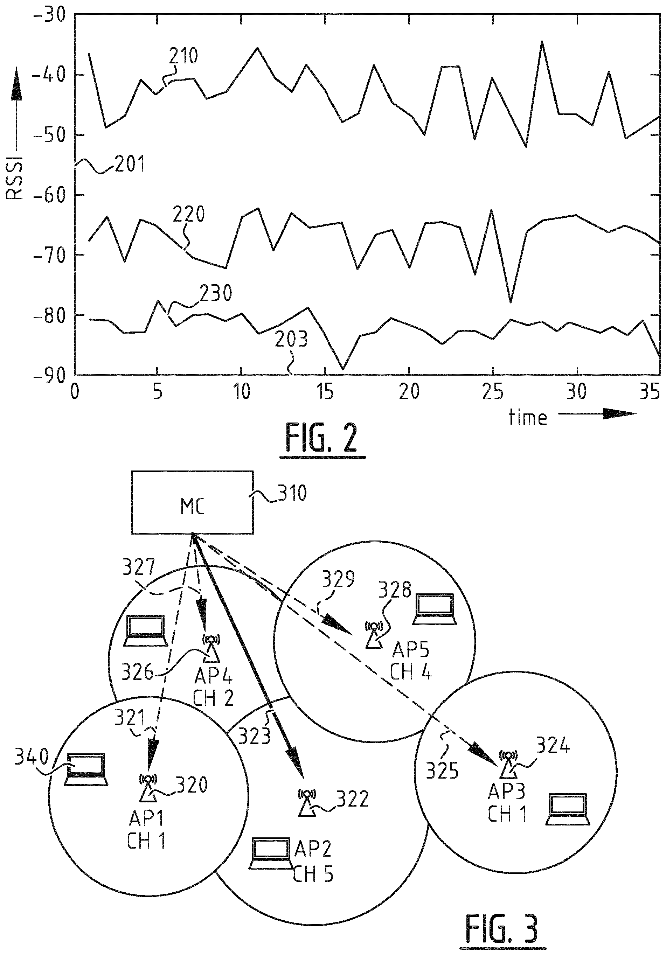

Step 101 is the step of obtaining data indicating a radio signal power present at the access point for each wireless channel. These data may be received signal strength indicators (RSSI's) versus time, such as the data shown in Figure 2.

Now referring to Figure 2, RSSI values in dBm are indicated versus time, which has a unit of minutes, but may have other units such as seconds depending on the needed data.

Dataset 210 indicates the measured RSSI values versus time for a first neighboring access point, as measured by a target access point. "Target access point" means the access point which measures the RSSI values for the other access points, and for which the interference will be determined as below.

Datasets 220 and 230 indicate further measured RSSI values versus time for two further neighboring access points. The neighboring access points may be operating at a certain channel, which may be the same or different as other access points or as the target access point.

To obtain a measure of interference, RSSI values are obtained for all neighboring access points and other neighboring devices such as user devices for which a radio signal may be measured by the target access point. In itself, the RSSI value gives no information on the amount interference it will cause to a target access point, for instance because the corresponding access point is operating in a channel that is sufficiently far away in terms of frequency from the channel used by the target access point.

Therefore, and now referring back to Figure 1, step 103 of calculating the interference parameter is performed. The interference parameter indicates an interference on at least one wireless channel based on the obtained data. The at least one wireless channel may be called the target wireless channel. The target wireless channel may be chosen to be the channel that the access point is operating on, but it may also be a channel chosen to determine the level of interference on that particular channel.

The obtaining of the data may comprise the step of calculating a total radio signal power per measured channel, preferably for all available channels, e.g. channel 1-11 or 1-14. Preferably, the total radio signal power per measured channel is calculated according to:

$$TP_j = \sum_{k=1}^{n_j} w_{k,j} * 10^{\left(\frac{RSSI_{k,j}}{10} - 3\right)}$$

where $TP_j$ is the total power sensed for channel j in Watts, $w_{k,j}$ is the quality of service weighting factor associated with $RSSI_{k,j}$, $RSSI_{k,j}$ is the power in dBm of signal number k that was sensed on the channel j, and $n_j$ is the total number of sensed signals on channel j. In this case, $w_{k,j}$ can be assumed to be 1 for all signals in case none of the signals are part of the wireless network of the target access point. Otherwise, weights may be set according to the nature of the data, for instance applying a larger weight for real time video and voice communication than for browsing or e-mail. In other words, if needed, the weighting of each RSSI parameter may be according to its required quality of service.

To calculate the interference parameter, as in step 103 of figure 1, the obtained data is weighted for each wireless channel based on a coupling parameter.

In a preferred embodiment, the total interference TI as experienced on channel i is calculated according to:

$$TI_j = \sum_{j=1}^{n_{ch}} \beta_{i,j} * TP_j$$

where $n_{ch}$ is the total number of channels, $\beta_{i,j}$ is the overlapping channel interference factors between channels i and j, which depends on the relative distance in terms of frequency of channels j and j. In other words, the total power sensed for channel j is weighted according to its influence on target channel I, and the weighted total powers sensed are summed to obtain the interference parameter, in this case indicating the total interference sensed on channel i, the target channel.

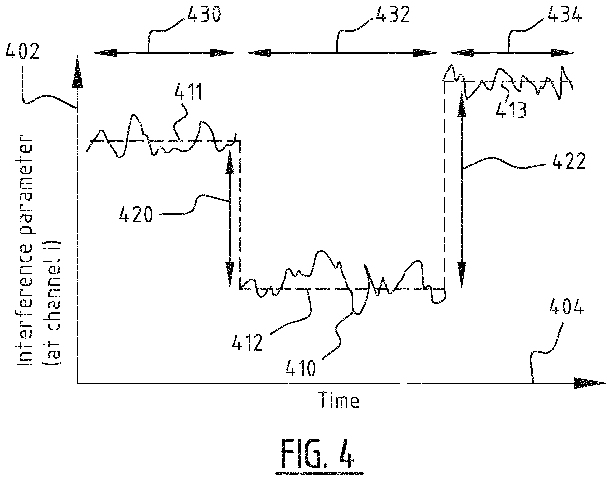

Now referring to figure 4, a plot of interference parameter at a certain target channel i 402 versus time 404 comprises a calculated interference parameter dataset 410. In a first time period 430, the calculated interference parameter is roughly constant, as indicated with dashed line 411, which may for instance be a linear least squares fit of the data in that period.

After time period 430, the data suddenly jumps to a lower interference value with a change indicated with arrow 420. The change will in this case be a negative value. This may indicate that a certain neighboring device that was causing interference is turned off, or has switched to another channel at which the device causes less interference.

During time period 432, the data 410 again shows a roughly constant interference parameter, as indicated with dashed line 412, again obtained with any suitable analysis method. Then, at the end of time period 432, the interference jumps to a larger value with a change 422. The change in interference 422 is positive in this case, in terms of the interference parameter. This may indicate that a new neighboring device, such as an access point, has started transmitting radio signals that are interfering to the target access point at or closer to the target channel.

Hereafter, the data again remains constant for a certain time period 434.

Since the data and therefore the interference parameter are obtained in time, a transient analysis may be performed.

In an embodiment, the transient analysis may be implemented by filtering a number of past data samples (to generate a stable mean) and comparing the filter output with the newly received data sample. If the value of newly data sample is higher than the filter mean by a threshold, a decision as e.g. in step 117 can be made. The same can be derived for lower values as well, similar to the description below.

The transient analysis may be used in two ways.

First, the transient analysis may be used in a learning mechanism 119. Especially in managed networks, several of the access points that are interfering with the target access point will be under control of a certain operator.

An example managed network is shown in Figure 3, wherein a remote management center (MC) 310 is able to control access points AP1 320, AP2 322, AP3 324, AP4 326 and AP5 328, shown respectively with couplings 321, 323, 325, 327 and 329. In this case, the target access point may be AP2 322, operating at channel 5. Then, rssi's for all neighboring access points 320, 324, 326, and 328 are obtained by measurements done by the target access point, while furthermore recording the respective channel for all rssi datasets, being channel 1, channel 1, channel 4 and channel 2 respectively.

This operator may be able to temporarily switch on and/or off certain access points, in the case of figure 4 all of AP1-AP5. By doing so, and at the same time measuring the rssi's and calculating the interference parameter over time, a measure of the change in the interference parameter will be obtained.

For instance, if the MC turns off AP5 after time period 430 in figure 4, then a change 420 in interference parameter may be noted. If thereafter, after time period 432, the MC turns AP5 on again, but now operating at channel 5, a change of 422 may be noted. As such, a system, such as the MC, performing the method including the transient analysis may learn which changes in interference parameter belong to behavior of specific AP's. A general threshold value or values may be determined indicating when an AP turns off, on and/or switches to another channel. Preferably, one threshold value is determined in order to simplify the method.

Furthermore, even in case no control is possible of the AP's, the system will learn when a certain AP turns on and/or off or switches to another channel, according to a measured change. Based on this behavior, the future interference may be predicted, which means there is increased knowledge available to decide how to operate access points.

In this manner, the learning mechanism 119 allows for improving decision making for operating an access point. It may be decided, as in step 117, to switch an access point to another channel before a loss in quality of service will be noticed by a user using a user device, because it is known that a certain interfering AP will start interfering within a relatively short timescale. For example in 5, 10 or 30 minutes. It will also be possible to decide (step 117) not to switch to another channel, because it is known that an interfering access point will go offline within a relatively short timescale. This may for example be in 5, 10 or 30 minutes.

In general, step 117 of figure 1 indicates the step of deciding whether to change a channel. The decision may include deciding whether to perform an action, wherein changing a channel of the access point is one such action. Further actions may be informing a user of a repair advice according to the interference experienced by the access point.

Again referring to figure 1, the transient analysis 105 in general, i.e. even when not in a learning phase, allows for a change in interference parameter to be obtained according to step 107, as described above for a change due to a controlled switch on/off.

In steps 109 and 111, the change in interference parameter is compared to the threshold. If the change is positive, i.e. indicating an increase in interference and if the change is larger than the threshold value (or a certain threshold value in case more threshold values are used, e.g. a threshold value for positive changes), then it is determined that the neighbor AP is ON, wherein ON may indicate ON in a certain channel. In step 111, when the change is negative, the change is compared to minus the threshold value. This may also be a separate switch off threshold value. If the change is smaller than minus the threshold value, it is determined that a neighbor AP is turned OFF, wherein OFF indicates OFF in a certain channel. The AP may still be switched on but in another channel causing less interference, for instance.

Thereafter, the deciding step 117 may be performed, which occur only according to the result of steps 113 and 115, but may furthermore take into account the learned behavior(s) of neighboring AP's as described above, in order to make a decision also based on predicted interference based in historic data of interference caused by the neighboring access points.

The learning phase may be performed in the beginning, but may also continue during the operation of the wireless network in order to improve the predictive capability of the method.

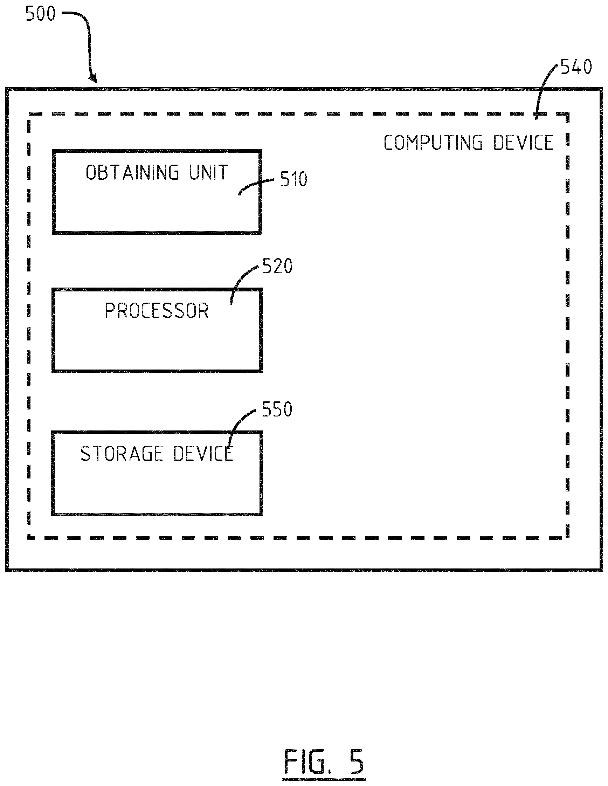

Figure 5 shows a system for operating a wireless network, wherein an obtaining unit 510 is suitable for obtaining the data, preferably rssi data. The system further includes a processor 520 suitable for calculating the interference parameter and performing the transient analysis. Furthermore, the system further includes a storage device 550 for storing the obtained data as well as data associated with the learning mechanism. The latter data may, for instance, be historic data for access points indicating their status (channel, on/off, etc), a rough indication of location for each access points, etc, etc. Preferably, the system 500 further comprises a computing device 540, wherein the computing device 540 preferably includes the obtaining unit 510, processor 520, and storage device 550. The computing device 540 is preferably a remote management computer, such as the one shown in figure 3, which is configured to operate one or more wireless networks by controlling one or more access points. As in figure 3, the couplings 321, 323, 325, 327 and 329 between the MC and the AP's may be via the operator's network, wherein the operator is operating the MC and AP's, but may also be via the internet directly, since the operator may provide users with a connection to the internet via the AP's.

In general, the calculated interference parameter allows one to know and predict when a certain neighboring access point is active or not, and allows the access point to adapt accordingly, e.g. by switching to another channel, for instance at a certain time, which may be known beforehand.

The method and system according to the embodiments of the present patent disclosure enable troubleshooting and identification of neighbor Wi-Fi AP (other network segments either public or private) due to the composite effects of multipath interference, additive/colored noise, impulsive noise and interference coming from transmissions belonging to different networks and provide pro-active repair advices before the customer calls the operator's helpdesk to complain.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

Moreover, explicit use of the term "unit", "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. Method of operating a wireless network, the wireless network comprising an access point (320, 322, 324, 326, 328) configured to wirelessly connect user devices to a further network, wherein the access point is wirelessly operating at a wireless channel, wherein one or more wireless sources are transmitting radio signals in one or more wireless channels, the method comprising:

   obtaining (101) data indicating a radio signal power present at the access point for each wireless channel;
   calculating (103) an interference parameter (410) indicating an interference on at least one wireless channel based on the obtained data, wherein the obtained data is weighted for each wireless channel based on a channel overlap parameter;
   obtaining (105, 107) a change of the calculated interference parameter in time; and
   determining (109, 111, 113, 115, 117) whether to perform an action among performable actions based on the obtained change in the calculated interference parameter in time, wherein the action is changing the wireless channel used by the access point to a wireless channel for which a lower interference parameter is calculated.

2. Method according to claim 1, wherein the obtaining a change in the calculated interference parameter in time is based on a transient analysis.

3. Method according to claim 1 or 2, wherein the determining whether to perform the action among performable actions based on the obtained change includes comparing (109, 111) the change of the interference parameter with a threshold value.

4. Method according to claim 3, wherein the threshold value is obtained by a learning phase (119) wherein the interference parameter is observed over time based on the radio transmission activity of the wireless sources.

5. Method according to claim 4, wherein the obtaining of the threshold value includes switching on and/or off one or more of the wireless sources.

6. Method according to any of the preceding claims, wherein the data indicating a radio signal power is obtained based on one or more received signal strength indicators (210, 220, 230) and quality of service weighting factors respectively associated with respective ones of the received signal strength indicators, wherein the received signal strength indicators are preferably obtained via a wireless receiver of the access point.

7. Method according to any of the preceding claims, wherein the interference parameter is calculated for the interference of the wireless channel that the access point is operating on.

8. Method according to any of the preceding claims, wherein obtained data indicates a total radio signal power sensed at the access point for each wireless channel, wherein the interference parameter is a total interference parameter wherein the weighted obtained data is summed over all of the wireless channels.

9. System (500) for operating a wireless network, the wireless network comprising an access point (320, 322, 324, 326, 328) configured to wirelessly connect user devices to a further network, wherein the access point is wirelessly operating at a wireless channel, wherein one or more wireless sources are transmitting radio signals in one or more wireless channels, the system comprising:

an obtaining unit (510) configured to obtain data indicating a radio signal power present at the access point for each wireless channel; and
a processor (520) configured to calculate an interference parameter indicating an interference on at least one wireless channel based on the obtained data, wherein the obtained data is weighted for each wireless channel based on a channel overlap parameter;
wherein the obtaining unit is further configured to obtain a change of the calculated interference parameter in time,
wherein the processor is further configured to determine whether to perform an action among performable actions based on the obtained change in the calculated interference parameter in time, wherein the action is changing the wireless channel used by the access point to a wireless channel for which a lower interference parameter is calculated.

10. System (500) according to claim 9, further comprising a storage device (550) configured to store the obtained data and the calculated interference parameter in time.

11. System (500) according to claim 9 or 10, wherein the obtaining unit (510) is further configured to obtain a change in the calculated interference parameter in time based on a transient analysis.

12. System (500) according to claim 9, 10, or 11, wherein the processor is configured to determine whether to perform the action among performable actions based on the obtained change includes comparing the change of the interference parameter with a threshold value.

13. A computer program product comprising a computer-executable program of instructions for performing, when executed on a computer, the steps of the method of any one of claims 1-8.

**Patentansprüche**

1. Verfahren zum Betreiben eines drahtlosen Netzwerks, wobei das drahtlose Netzwerk einen Zugangspunkt (320, 322, 324, 326, 328) umfasst, der dazu ausgelegt ist, Benutzervorrichtungen drahtlos mit einem weiteren Netzwerk zu verbinden, wobei der Zugangspunkt drahtlos an einem drahtlosen Kanal betrieben wird, wobei eine oder mehrere drahtlose Quellen in einem oder mehreren drahtlosen Kanälen Funksignale übertragen, wobei das Verfahren Folgendes umfasst:

Erhalten (101) von Daten, die eine Funksignalleistung anzeigen, die am Zugangspunkt für jeden drahtlosen Kanal vorhanden ist;
Berechnen (103) eines Interferenzparameters (410), der eine Interferenz auf Basis der erhaltenen Daten in mindestens einem drahtlosen Kanal anzeigt, wobei die erhaltenen Daten für jeden drahtlosen Kanal auf Basis eines Kanalüberlappungsparameters gewichtet werden;
Erhalten (105, 107) einer Änderung des berechneten Interferenzparameters in der Zeit; und
Bestimmen (109, 111, 113, 115, 117) auf Basis der erhaltenen Änderung des berechneten Interferenzparameters in der Zeit, ob eine Aktion unter durchführbaren Aktionen durchzuführen ist, wobei die Aktion den drahtlosen Kanal, der vom Zugangspunkt verwendet wird, in einen drahtlosen Kanal ändert, für den ein niedrigerer Interferenzparameter berechnet ist.

2. Verfahren nach Anspruch 1, wobei das Erhalten einer Änderung des berechneten Interferenzparameters in der Zeit auf einer Transientenanalyse basiert.

3. Verfahren nach Anspruch 1 oder 2, wobei das Bestimmen auf Basis der erhaltenen Änderung, ob die Aktion unter durchführbaren Aktionen durchzuführen ist, das Vergleichen (109, 111) der Änderung des Interferenzparameters mit einem Schwellwert umfasst.

4. Verfahren nach Anspruch 3, wobei der Schwellwert durch eine Lernphase (119) erhalten wird, wobei der Interferenzparameter auf Basis der Funkübertragungsaktivität der drahtlosen Quellen über die Zeit beobachtet wird.

5. Verfahren nach Anspruch 4, wobei das Erhalten des Schwellwerts das Ein- und/oder Ausschalten von einer oder mehreren der drahtlosen Quellen beinhaltet.

6. Verfahren nach einem der vorhergehenden Ansprüche, wobei die Daten, die eine Funksignalleistung anzeigen, auf Basis von einem oder mehreren Empfangssignalstärkeindikatoren (210, 220, 230) und von Dienstqualitätsgewichtungsfaktoren erhalten werden, die jeweils mit jeweiligen der Empfangssignalstärkeindikatoren verknüpft sind, wobei die Empfangssignalstärkeindikatoren vorzugsweise via einen drahtlosen Empfänger des Zugangspunkts erhalten werden.

7. Verfahren nach einem der vorhergehenden Ansprüche, wobei der Interferenzparameter für die Interferenz des drahtlosen Kanals berechnet wird, auf dem der Zugangspunkt betrieben wird.

8. Verfahren nach einem der vorhergehenden Ansprüche, wobei erhaltene Daten eine gesamte Funksignalleistung anzeigen, die am Zugangspunkt für jeden drahtlosen Kanal erfasst wird, wobei der Interferenzparameter ein gesamter Interferenzparameter ist, wobei die gewichteten erhaltenen Daten über alle drahtlosen Kanäle summiert werden.

9. System (500) zum Betreiben eines drahtlosen Netzwerks, wobei das drahtlose Netzwerk einen Zugangspunkt (320, 322, 324, 326, 328) umfasst, der dazu ausgelegt ist, Benutzervorrichtungen drahtlos mit einem weiteren Netzwerk zu verbinden, wobei der Zugangspunkt drahtlos an einem drahtlosen Kanal betrieben wird, wobei eine oder mehrere drahtlose Quellen in einem oder mehreren drahtlosen Kanälen Funksignale übertragen, wobei das System Folgendes umfasst:

eine Erhaltungseinheit (510), die dazu ausgelegt ist, Daten zu erhalten, die eine Funksignalleistung anzeigen, die am Zugangspunkt für jeden drahtlosen Kanal vorhanden ist; und
einen Prozessor (520), der dazu ausgelegt ist, einen Interferenzparameter, der eine Interferenz auf Basis der erhaltenen Daten in mindestens einem drahtlosen Kanal anzeigt, zu berechnen, wobei die erhaltenen Daten für jeden drahtlosen Kanal auf Basis eines Kanalüberlappungsparameters gewichtet werden;
wobei die Erhaltungseinheit ferner dazu ausgelegt ist, eine Änderung des berechneten Interferenzparameters in der Zeit zu erhalten,
wobei der Prozessor ferner dazu ausgelegt ist, auf Basis der erhaltenen Änderung des berechneten Interferenzparameters in der Zeit zu bestimmen, ob eine Aktion unter durchführbaren Aktionen durchzuführen ist, wobei die Aktion den drahtlosen Kanal, der vom Zugangspunkt verwendet wird, in einen drahtlosen Kanal ändert, für den ein niedrigerer Interferenzparameter berechnet ist.

10. System (500) nach Anspruch 9, das ferner eine Speichervorrichtung (550) umfasst, die dazu ausgelegt ist, die erhaltenen Daten und den berechneten Interferenzparameter in der Zeit zu speichern.

11. System (500) nach Anspruch 9 oder 10, wobei die Erhaltungseinheit (510) ferner dazu ausgelegt ist, auf Basis einer Transientenanalyse eine Änderung des berechneten Interferenzparameters in der Zeit zu erhalten.

12. System (500) nach Anspruch 9, 10 oder 11, wobei der Prozessor dazu ausgelegt ist zu bestimmen ob die Aktion unter durchführbaren Aktionen durchzuführen ist auf Basis der erhaltenen Änderung, das Vergleichen der Änderung des Interferenzparameters mit einem Schwellwert umfasst.

13. Computerprogrammprodukt, das ein computerausführbares Programm mit Anweisungen zum Durchführen der Schritte des Verfahrens von einem der Ansprüche 1 bis 8, wenn es auf einem Computer ausgeführt wird, umfasst.

**Revendications**

1. Procédé d'exploitation d'un réseau sans fil, le réseau sans fil comprenant un point d'accès (320, 322, 324, 326, 328) configuré pour connecter sans fil des dispositifs utilisateurs à un autre réseau, dans lequel le point d'accès fonctionne sans fil sur un canal sans fil, dans lequel une ou plusieurs sources sans fil transmettent des signaux radio dans un ou plusieurs canaux sans fil, le procédé comprenant :

l'obtention (101) de données indiquant une puissance de signal radio présente au point d'accès pour chaque canal sans fil ;
le calcul (103) d'un paramètre d'interférence (410) indiquant une interférence sur au moins un canal sans fil sur la base des données obtenues, dans lequel les données obtenues sont pondérées pour chaque canal sans fil sur la base d'un paramètre de chevauchement de canaux ;
l'obtention (105, 107) d'une modification du paramètre d'interférence calculé dans le temps ; et
la détermination (109, 111, 113, 115, 117) de la nécessité ou non de réaliser une action parmi des actions réalisables sur la base de la modification obtenue du paramètre d'interférence calculé dans le temps, dans lequel l'action modifie le canal sans fil utilisé par le point d'accès en un canal sans fil pour lequel un paramètre d'interférence plus faible est calculé.

2. Procédé selon la revendication 1, dans lequel l'obtention d'une modification du paramètre d'interférence calculé dans le temps est basée sur une analyse transitoire.

3. Procédé selon la revendication 1 ou 2, dans lequel la détermination de la nécessité ou non de réaliser l'action parmi les actions réalisables sur la base de la modification obtenue comporte la comparaison (109, 111) de la modification du paramètre d'interférence à une valeur seuil.

4. Procédé selon la revendication 3, dans lequel la valeur seuil est obtenue par une phase d'apprentissage (119), dans lequel le paramètre d'interférence est observé au fil du temps sur la base de l'activité de transmission radio des sources sans fil.

5. Procédé selon la revendication 4, dans lequel l'obtention de la valeur seuil comporte l'activation et/ou la désactivation d'une ou plusieurs des sources sans fil.

6. Procédé selon l'une quelconque des revendications précédentes, dans lequel les données indiquant une puissance de signal radio sont obtenues sur la base d'un ou plusieurs indicateurs d'intensité de signal reçu (210, 220, 230) et de facteurs de pondération de qualité de service respectivement associés à des indicateurs respectifs des indicateurs d'intensité de signal reçu, dans lequel les indicateurs d'intensité de signal reçu sont de préférence obtenus via un récepteur sans fil du point d'accès.

7. Procédé selon l'une quelconque des revendications précédentes, dans lequel le paramètre d'interférence est calculé pour l'interférence du canal sans fil sur lequel le point d'accès fonctionne.

8. Procédé selon l'une quelconque des revendications précédentes, dans lequel les données obtenues indiquent une puissance de signal radio totale détectée au point d'accès pour chaque canal sans fil, dans lequel le paramètre d'interférence est un paramètre d'interférence total dans lequel les données obtenues pondérées sont additionnées sur tous les canaux sans fil.

9. Système (500) d'exploitation d'un réseau sans fil, le réseau sans fil comprenant un point d'accès (320, 322, 324, 326, 328) configuré pour connecter sans fil des dispositifs utilisateurs à un autre réseau, dans lequel le point d'accès fonctionne sans fil sur un canal sans fil, dans lequel une ou plusieurs sources sans fil transmettent des signaux radio dans un ou plusieurs canaux sans fil, le système comprenant :

une unité d'obtention (510) configurée pour obtenir des données indiquant une puissance de signal radio présente au point d'accès pour chaque canal sans fil ; et
un processeur (520) configuré pour calculer un paramètre d'interférence indiquant une interférence sur au moins un canal sans fil sur la base des données obtenues, dans lequel les données obtenues sont pondérées pour chaque canal sans fil sur la base d'un paramètre de chevauchement de canaux ;
dans lequel l'unité d'obtention est en outre configurée pour obtenir une modification du paramètre d'interférence calculé dans le temps,
dans lequel le processeur est en outre configuré pour déterminer la nécessité ou non de réaliser une action parmi des actions réalisables sur la base de la modification obtenue du paramètre d'interférence calculé dans le temps, dans lequel l'action modifie le canal sans fil utilisé par le point d'accès en un canal sans fil pour lequel un paramètre d'interférence plus faible est calculé.

10. Système (500) selon la revendication 9, comprenant en outre un dispositif de stockage (550) configuré pour stocker les données obtenues et le paramètre d'interférence calculé dans le temps.

11. Système (500) selon la revendication 9 ou 10, dans lequel l'unité d'obtention (510) est en outre configurée pour obtenir une modification du paramètre d'interférence calculé dans le temps sur la base d'une analyse transitoire.

12. Système (500) selon la revendication 9, 10, ou 11, dans lequel le processeur est configuré pour déterminer si la nécessité ou non de réaliser l'action parmi les actions réalisables sur la base de la modification obtenue, comporte la comparaison de la modification du paramètre d'interférence à une valeur seuil.

13. Produit de programme informatique comprenant un programme d'instructions exécutable par ordinateur pour réaliser, lorsqu'il est exécuté sur un ordinateur, les étapes du procédé de l'une des revendications 1 à 8.

FIG. 1

FIG. 2

FIG. 3

FIG. 4

500

540

COMPUTING DEVICE

OBTAINING UNIT — 510

520
PROCESSOR

550
STORAGE DEVICE

FIG. 5

**EP 3 367 738 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3048846 A1
- WO 2007051148 A2
- EP 3018856 A1